# EUROPEAN PATENT SPECIFICATION

(11) **EP 3 557 426 B1**
(45) Date of publication and mention of the grant of the patent: **23.11.2022**
(21) Application number: 19161452.8
(22) Date of filing: 07.03.2019
(51) Int. Cl.: G06F 12/0888, G06F 12/0811, G06F 12/0897

(54) **DATA CENTER ENVIRONMENT WITH CUSTOMIZABLE SOFTWARE CACHING LEVELS**
DATENZENTRUMUMGEBUNG MIT ANPASSBAREN SOFTWARE-ZWISCHENSPEICHERUNGSEBENEN
ENVIRONNEMENT DE CENTRE DE DONNÉES AVEC DES NIVEAUX DE MISE EN CACHE DE LOGICIELS PERSONNALISABLES

(30) Priority: 19.04.2018 US 201815957575
(43) Date of publication of application: 23.10.2019
(73) Proprietor: INTEL Corporation, Santa Clara, CA 95054 (US)
(72) Inventor: KUMAR, Karthik, Chandler, AZ 85249 (US); GRANIELLO, Benjamin, Chandler, AZ 85249 (US); SCHMISSEUR, Mark A., Phoenix, AZ 85048 (US); WILLHALM, Thomas, 69207 Sandhausen (DE); GUIM BERNAT, Francesc, 08036 Barcelona (ES)
(74) Representative: Rummler, Felix

(56) References cited:
- WO-A1-2013/048503
- US-A1- 2002 099 913
- US-A1- 2008 059 707

## Description

### Field of Invention

The field of invention pertains generally to the computing sciences, and, more specifically, to a data center environment with customizable software caching levels.

### Background

With the growing importance of cloud-computing services and network and/or cloud storage services, the data center environments from which such services are provided are under increasing demand to utilize their underlying hardware resources more efficiently so that better performance and/or customer service is realized from the underlying hardware resources. US 2002/099913 A1, WO 2013/048503 A1, and US 2008/059707A1 disclose cache controllers related to the preamble of claim 1.

### Summary of the invention

The present invention is defined by the independent claims. Further embodiments are set forth in the dependent claims.

### Figures

A better understanding of the present invention can be obtained from the following detailed description in conjunction with the following drawings, in which:
Fig. 1 shows a traditional software and data center environment;
Fig. 2 shows an emerging software and data center environment;
Fig. 3 shows a customizable caching level hierarchy;
Fig. 4 shows a customizable data center edge cache;
Fig. 5 shows a system for changing caching configurations over a software run-time period;
Fig. 6 shows circuitry for implementing a customizable caching level;
Fig. 7 shows a computing system.

### Detailed Description

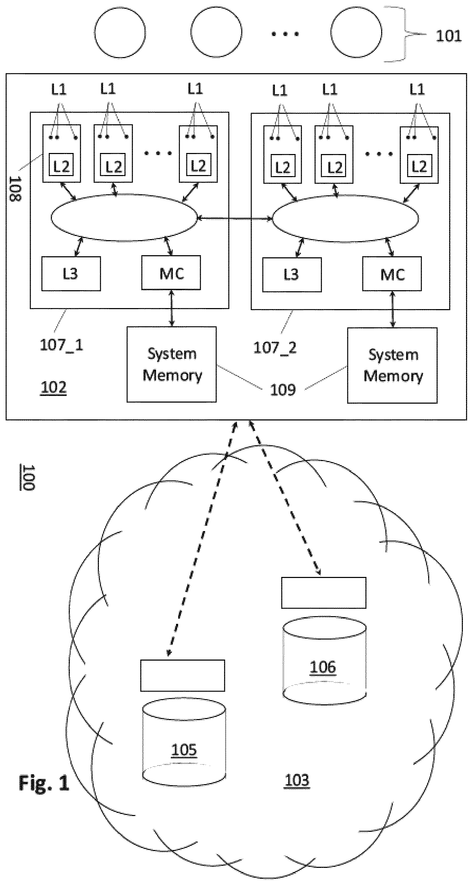

Fig. 1 shows a prior art high performance data center environment 100. As observed in Fig. 1, a number of high performance software programs 101 are instantiated on a high performance server computer 102. For ease of drawing Fig. 1 shows only one server computer 102. The reader should understand that high performance data center environments often include many high performance server computers and software programs.

The server computer 102 can be viewed as a peripheral component that relies on various centralized functions of the data center 103. For example, the software programs 101 may rely on the data center 103 for various cloud-like services such as: 1) Internet and/or other network access; 2) one or more persisted databases and/or non volatile mass storage resources 105, 106; 3) load balancing of incoming new requests (e.g., received from the Internet) directed to the software programs 101; 4) failover protection for any of the server computers that are coupled to the data center 103; 5) security; and/or, 6) management and statistics monitoring.

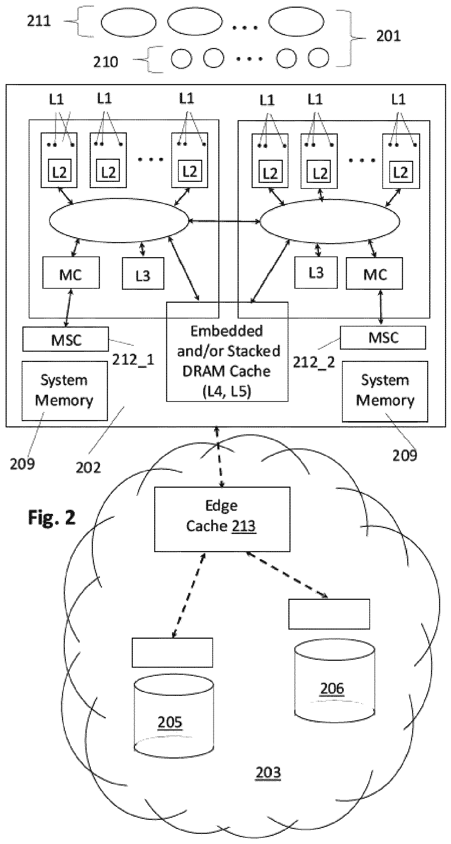

Fig. 1 also details the caching structure that services the software 101. As is known in the art, a server computer 102 typically includes multiple processor semiconductor chips 107_1, 107_2. For ease of drawing Fig. 2 shows the server computer 102 as only including two processor semiconductor chips 107_1, 107_2. The reader should understand, however, that server computers often include more than one processor chip. Each processor chip 107 includes multiple processing cores. For ease of drawing only one of the processing cores is labeled with a reference number (reference number 108). Each processing core includes multiple instruction execution pipelines (e.g., 8 pipelines, 16 pipelines, etc.). As is known in the art, an instruction execution pipeline (or hardware thread thereof) is the fundamental unit of hardware for executing a single software thread.

In the specific caching architecture of Fig. 1, each instruction execution pipeline has its own private, small but very low latency L1 cache. The multiple instruction execution pipelines of a same processing core share their own slightly larger and slightly slower L2 cache. The same processing cores of a same processor semiconductor chip 107_1, 107_2 share a same "last level" cache (L3). If the last level cache is missed the processor chip's caches are exhausted, and data accesses are made to the server computer's system memory 109 (also referred to as main memory). If needed data is not in system memory 109, such data may be called up from a database 105 or mass storage resource 106 within the data center 103.

High performance software programs have traditionally been monolithic or, said another way, largely self contained, in terms of the logic and processes that they utilize to effect their respective functions. In a sense, the overall traditional implementation of Fig. 1 is "course-grained" in that large self-contained blocks of software 101 have relatively few caching levels (L1, L2, L3).

Because of the coarse-grained nature of the overall implementation 100, the caching functions themselves are relatively simplistic. Essentially, caching for all software programs include all caching levels (L1, L2 and L3) and are utilized/accessed in strict sequence order. That is, if an item of data is not found in particular caching level it is looked for in an immediately next lower caching level, or, similarly, if an item of data is evicted from a particular caching level it is entered into the immediately next lower caching level. This simple caching function is essentially followed for all software processes including each of the multiple and various different kinds of software processes that can exist within the monolithic software bodies 101 themselves. The traditional caching structure of Fig. 1 can therefore be said to only offer unilateral caching treatment to all software processes.

Two emerging changes however, one in software structure and another in hardware caching level structure, provide an opportunity to at least partially remove the course-grained and unilateral caching service and replace it with a more fine-grained and customized caching service approach.

Referring to Fig. 2, the first change is that software programs are becoming more open and granular. That is, instead of being large, self contained "black box" bodies of program code 101 as observed in Fig. 1, by contrast, as observed in Fig. 2, the software programs are becoming distributed collections of smaller bodies of program code.

The smaller bodies of software can, in various instances, support the software logic of more than one application software program. Here, functions that are common or fundamental to many different types of application software programs (e.g., user identification, user location tracking, cataloging, order processing, marketing, etc.) are being instantiated as "micro-services" 210 within the overall software solution 201 that the respective custom logic of each application software program 211 calls upon and utilizes. As such, whereas older generation application programs were written with custom code that internally performed these services, by contrast, newer generation application software 211 is becoming more and more composed of just the custom logic that is specific to the application with embedded functional calls as needed to the micro-services 210 that have been instantiated within a lower level software platform.

A second change is the increased number of caching levels offered by the hardware and/or data center architecture. With respect to the actual hardware, advances in the physical integration of DRAM memory, such as embedded DRAM (eDRAM) and die stacking technologies (e.g., High Bandwidth Memory (HBM)) and/or the integration of emerging byte addressable non volatile memory technology as a replacement for DRAM in system memory have resulted in additional CPU level caches (e.g., L4 and/or L5 caches) and/or "memory side" caches 212 that behave as a front-end cache of the system memory.

The new lower level (L4, L5) CPU level cache(s) architecturally reside beneath the traditional SRAM L3 cache of Fig. 1. Here, eDRAM can be integrated into a semiconductor processor die to act as a lower L4 level cache for the CPU cores of the processor. Likewise, DRAM memory chips that are stacked on a semiconductor processor die and/or are stacked on or within a CPU package having one or more processor semiconductor die can act as a lower L4 or L5 level cache for the CPU cores of the die or package.

Emerging byte addressable non volatile memory as a replacement for DRAM in system memory 209 has resulted in multi-level system memory architectures in which, e.g., a higher level of DRAM acts as a memory side cache 212_1, 212_2 for the slower emerging non volatile memory which is allocated the system memory address space of the computer. Here, the memory side cache 212 can be viewed as a "front-end" cache for system memory that speeds up system memory performance for all components that use system memory (e.g., the CPU cores, GPUs, peripheral controllers, network interfaces, etc.). Nevertheless, because CPU cores heavily utilize system memory, memory side caches can be viewed as a caching level in the hardware architecture from the perspective of a CPU core even though such memory side caches are not strictly CPU caches (because they do not strictly cache data only for CPU cores).

For simplicity Fig. 2 only shows the presence of one memory side cache but different memory side cache implementations and architectures are possible resulting in the possibility of more than one memory side cache in a single system. Here, with DRAM as the memory side cache technology, such DRAM may be implemented as eDRAM or stacked DRAM chips on the processor die, e.g., as architectural components of the memory controller (MC). These DRAMs may cache the entire range of system memory address space that is handled by the memory controller.

Additionally or in the alternative, in systems where system memory is implemented with dual in line memory modules (DIMMs) that plug into the system, one or more memory side caches may be structured into the DIMMs. For example, one or more DRAM DIMMs may plug into a same memory channel as one or more emerging non volatile memory DIMMs. Here, the DRAM DIMMs may act as a memory side cache on the memory channel for the non volatile DIMMs. In yet other implementations the entire combined capacity of the DRAM DIMMs may be treated as a single cache such that a DIMM on one channel can cache data stored on a non volatile DIMM on another channel.

Additionally or in the alternative a single DIMM may have both DRAM and non volatile memory where the DRAM acts as a memory side cache on the DIMM for the non volatile memory. Alternatively the DRAM may be used as a memory side cache for the DIMM's memory channel or for all of system memory.

Regardless, note the potential for many more caching levels including more than one memory side cache. For example, a single system may have three active memory side caches (e.g., stacked DRAM that caches all of system memory as a highest memory side cache level, DRAM DIMMs that act as memory side cache for their respective memory channel that act as a middle memory side cache level, and DIMMs having both DRAM and non volatile memory where the DRAM acts as memory side cache for just the DIMM as a lowest memory side cache level). For simplicity, much the remainder of the discussion will assume only one memory side cache level. However the reader should understand that multiple memory side caching levels are possible and understand that the teaching below apply to such implementations.

Further still, a DIMM is just one type of pluggable memory component having memory capacity with integrated memory chips and that can plug into a fixture, e.g. of a system motherboard or CPU socket, to expand the memory capacity of the system it is being plugged into. Over the years other types of pluggable memory components may emerge (e.g., having different form factor than a DIMM). Here, the customizable caching resources (and possibly the look-up and gateway circuitry) may also reside on a pluggable memory component.

A further data caching improvement is the presence of a data center edge cache 213. Here, the data center itself caches frequently accessed data items at the "edge" of the datacenter 203 so that, e.g., the penalty of accessing an inherently slower database 205, 206 or mass storage resource that resides within the data center is avoided. The edge cache 213 can be seen as a data cache that caches the items that are most frequently requested of the data center. Thus, the edge cache 213 may collectively cache items that are persisted in different databases, different mass storage devices and/or are located within any other devices within the data center.

Thus, returning to a comparison of Figs. 1 and Fig. 2, the emerging infrastructure configuration of Fig. 2 is characterized by more granular and free-standing software programs 202 whose data needs are serviced by more caching levels. Both features provide an opportunity to provide customized caching services for the different bodies of software based on their different needs/characteristics. More precisely, unlike traditional approaches in which all data was supported by all levels of the relatively fewer caching levels, by contrast, the environment of Fig. 2 can be configured to provide the different bodies of software with different/customized caching that defines, for each different instance of software, which caching of the many levels are to be configured to provide caching services for the software and which ones are not. That is, for instance, a first software instance may be configured to receive caching services from the memory side cache 212 of its system memory, while, a second software instance may be configured so that the memory side cache 212 of its system memory is not utilized (is bypassed).

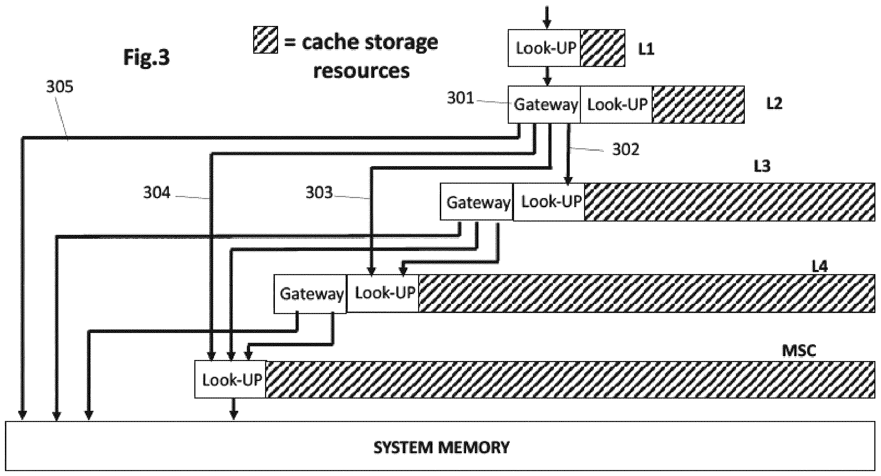

Fig. 3 shows an exemplary caching design that can be mapped onto the many tiered caching structure of Fig. 2 to effect customized caching tier structures for different software programs individually. In the exemplary caching design of Fig. 3, L1 caches do not provide customized caching treatments (all software threads that execute on an instruction execution pipeline that is associated with a particular L1 cache have their data cached in the L1 cache).

By contrast, all caching levels beneath the L1 cache level can be customized. As such, the L2 cache level includes a gateway function 301 that determines, for each cache miss from a higher L1 cache, whether the miss is to be serviced by the L2 cache. Here, as is known in the art, each request for data from a cache essentially requests a cache line of data identified by a particular system memory address. The gateway logic 301 of the L2 cache includes internal information that identifies which system memory address ranges are to receive L2 cache treatment and which ones are not. If an incoming request from an L1 miss specifies a system memory address that is within one of the ranges that the L2 cache is configured to support, the request is passed to the look-up logic of the L2 cache which performs a look-up for the requested cache line.

Here, as is known in the art, software programs are allocated system memory address space. If the address of the requested cache line falls within one of the address ranges that the L2 cache is configured to support, in various embodiments, the address range that the request falls within corresponds to the address range (or portion thereof) that has been allocated to the software program that presently needs the requested data. Thus, by configuring the allocated system memory address range (or portion thereof) of the software program that has issued the request for the cache line's data into the gateway 301 of the L2 cache, the software program is affectively configured with L2 cache service. Software programs (or portions thereof) that are not to be configured with L2 cache service do not have their corresponding system memory address ranges programmed into the L2 cache gateway 301 for purposes of determining whether or not L2 cache service is to be provided.

Continuing with the present example, assuming that the incoming request is for a software program that has been configured with L2 cache service, the request's address will fall within an address range that has been programmed into the L2 cache gateway for L2 cache service. If the requested cache line is found in the L2 cache, the cache line is returned to the requestor (the pipeline that requested the data).

If the cache line is not found in the L2 cache, or if the request's address is not within an address range that has been configured for L2 cache service (e.g., the software thread that issued the cache line request belongs to a software program that has not been configured to receive L2 cache service), the gateway logic 301 of the L2 cache determines which cache level is the next appropriate cache level for the request. Thus, in the particular embodiment of Fig. 3, the gateway logic 301 for the L2 cache not only keeps information that determines, for any received request, whether L2 cache treatment is appropriate, but also, if L2 cache treatment is not appropriate, which of the lower cache levels is appropriate for the particular request.

As such, Fig. 3 shows logical connections/pathways between the L2 gateway logic 301 and each of the lower level caches (L3, L4 and MSC). That is, path 302 corresponds to a configuration where the request's address falls within an address range that is configured with the L3 cache as being the next, lower cache level; path 303 corresponds to a configuration where the request's address falls within an address range that is configured with the L4 cache as being the next, lower cache level; path 304 corresponds to a configuration where the request's address falls within an address range that is configured with the MSC cache as being the next, lower cache level; and, path 305 corresponds to a configuration where the request's address falls within an address range that is configured with no cache service between the L2 cache level and main memory directly (memory side cache is bypassed).

Ideally, the gateway logic of any of the lower cache levels L3, L4 and MSC need not determine whether or not cache treatment is appropriate. That is, because the gateway logic 301 of the L2 level sends all lower requests to their correct cache level, the recipient level need not ask the question if the request is to be processed at the recipient level (the answer is always yes). As such, the gateway logic of the lower L3, L4 and MSC levels need only ask what the next correct lower level is in the case of a cache miss at the present, lower level. Evictions from a particular cache level are handled similarly, in that, an address range that the evicted cache line is associated with is entered in the cache level's gateway which informs the gateway as to which lower level cache the evicted cache line is to be directed to.

The pathways observed in fig. 3 are at least logical and may even be physical. That is, with respect to the later concept, the system may be designed with physical paths that bypass a next level without invoking its gateway logic. Alternatively, the system may be physically designed so that a request from a higher level must pass to the immediate next lower level where the gateway logic of the immediate next lower level determines, for those request that are to bypass the immediate next lower level, that a cache look-up is not to be performed at the next lower level. In these designs, note that the gateway logic need not determine the next appropriate lower level. Rather, each gateway at a particular level simply determines whether a new request has an address that warrants a look-up at the level. If not, the request is passed to the next immediately lower level where the gateway runs through the same inquiry and follow-through.

As is known in the art, lower level software, such as an operating system instance or virtual machine monitor understands which software programs have been allocated which system memory address space ranges. As such, the software "knows" if a needed item of data is within system memory or not. In cases where a needed item of data is known to not be physically present in system memory, the software instead asks deeper non volatile mass storage for one or more "pages" of data that include the needed data to be moved from mass storage to system memory.

Referring briefly back to Fig. 2, in the case of the edge cache 213 of the data center, in the case where the requests that are being sent to the data center to access such pages for migration up to system memory, the edge cache 213 may contain such pages to effectively provide faster observed performance of the underlying mass storage resources 205, 206. That is, whereas cache levels L1, L2, L3, L4 and MSC cache items at cache line granularity, by contrast, the edge cache 213 may cache items at a granularity of one or more pages. As such, in the case of hit in the edge cache 213, the one or more pages are moved or copied from the edge cache 213 up to system memory.

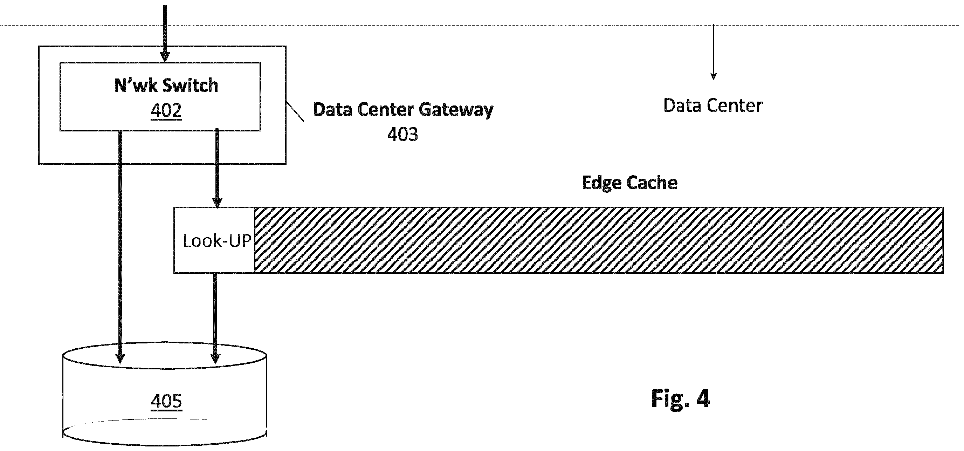

As observed in Fig. 4, a similar gateway function may be imposed at the front end of the edge cache 413. However, the gateway function is effected in the switch core 402 of a networking gateway 403 (e.g., gateway switch or router that sits at the edge of the data center) that receives requests into the data center. Here, the switch core 402 is designed to recognize which incoming requests are directed to which pages, where, certain pages are understood to be utilized by certain software programs. Requests that are directed to pages whose corresponding software programs are not to receive edge cache treatment are directed to mass storage directly 405. Requests that are directed to pages whose corresponding software programs are to receive edge cache treatment are directed to the edge cache.

Further still, the emergence of byte addressable non volatile memory as a replacement of DRAM in system memory has blurred the lines between traditional system memory and traditional storage. As such, conceivably, system memory may be deemed to include the address space of the mass non volatile storage 405 and/or data access granularity at the edge cache and/or mass storage device(s) 405 are a cache line or at least something less than one or more pages of data (or at least something smaller than one traditional 4kB page of data). In the case of the former (the mass storage device 405 is deemed a system memory component), the edge cache becomes, e.g., another CPU level cache (e.g., an L5 cache). In this case, the switch core 402 can be designed to be programmed with the kind of functionality described above for the gateway logic of the cache levels of Fig. 3. Here, note that the mass storage device 405 may be implemented with memory semiconductor chips composed of the same or similar emerging non volatile random access memory as the system memory. Examples include various forms of resistive non volatile memories (e.g., phase change memory, ferroelectric memory (FeRAM), resistive memory (RRAM), 3D cross-point memories, magnetic memory (MRAM)).

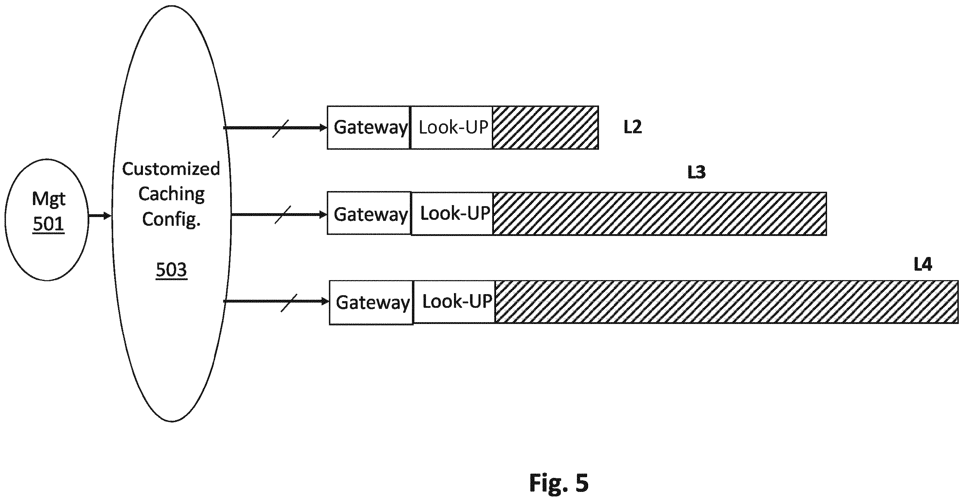

In reference to the exemplary system of Fig. 2, Fig. 5 shows another possible implementation in which the gateway configurations of the different caching levels are changed over the run-time of the various server computers, the execution of their various software routines and the data center as a whole. Here, for example, depending on the current flavors of software instances that are currently executing and/or the capacity utilizations of the different caching levels, configuration software 503 may change the contents of the different address range settings within the respective gateways of the different caching levels "on-the-fly" to better service the currently executing software instances.

For example, if the state of the overall system is such that a few of the currently executing programs are high performance programs (are highly sensitive to L2, L3 or L4 cache misses) while the remaining other executing programs are relatively low performance programs (that are indifferent to L2, L3 or L4 cache misses), then, the configuration software 503 may change the settings of the L2, L3 and L4 gateways to provide as much L2, L3 and L4 caching resources to the high performance programs but not the low performance programs. Here, the aforementioned state of the overall system (that recognizes execution of a few high performance programs and remaining execution of low performance programs) may be detected by management software 501 that oversees operation of the overall system including recognition of actively executing programs, cache utilization levels, statistic tracking, etc. By reporting its observations to the caching configuration software 502, the caching configuration software can "tweak" which actively executing programs are allocated to which caching levels. Thus, over time, the addresses that are programmed into the gateways are changed over time. Although described as software, the management 501 and configuration 502 functions can also be implemented in hardware or as combinations of software and hardware, partially or wholly.

In further or related embodiments, different configuration settings are programmed into the gateways pre-runtime, and, which configuration settings are utilized depends on, e.g., caching level utilization. For example, a gateway may be configured to allocate only small percentage of the address space for service at a particular caching level for each of a large number of different software programs under high capacity utilization of the caching level. However, the gateway is also programmed to allocate more address space per program as the capacity utilization of the caching levels recedes.

Alternatively or in combination, a gateway may be configured to not permit caching service for certain programs while utilization levels are high. However, as utilization of the caching level recedes, respective address space of these programs are programmed into the gateway to open-up caching service at the caching level for these programs. Here, the utilization levels and address space ranges can be programmed into the gateway pre-runtime and the gateway has logic to use the correct address ranges based on the utilization of its respective cache level.

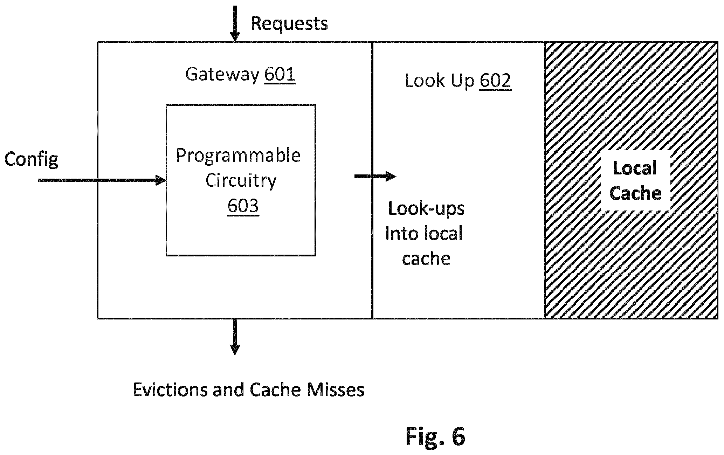

Fig. 6 shows an embodiment of the hardware that may be used to implement any of the caching levels described above. Here, notably, the logic circuitry that implements the caching level includes gateway logic circuity 601 beyond the traditional look-up logic circuitry 602 and caching resources of the cache. The gateway logic circuitry 601 also includes programmable circuitry (e.g., static random access memory (SRAM), embedded dynamic random access memory (DRAM), ternary content addressable memory (TCAM), register space, field programmable gate array (FPGA) circuitry, programmable logic array (PLA) circuitry, programmable logic device (PLD), etc.) to hold the programmed entries of address space ranges that: 1) warrant a look-up into the local cache resources; and/or 2) pertain to a particular next lower cache level that a missed cache request or evicted locally cached item is to be evicted to.

Where the caching circuitry of Fig. 6 is instantiated for any of the L1, L2 or L3 caching levels, such circuitry may be disposed in the processor semiconductor chip where these caches reside. With respect to the L4 caching level, note that the caching circuity of Fig. 6 may be disposed in the processor semiconductor chip if the L4 cache is implemented in the processor as embedded DRAM or as DRAM die that is stacked on the processor chip. If the L4 cache is implemented as stacked DRAM die within the semiconductor package that the processor chip is integrated within, the caching circuitry of Fig. 6 for the L4 cache may be disposed on a substrate die that resides beneath the stacked die or in the processor semiconductor chip. With respect to the memory side cache (MSC), the caching circuitry of Fig. 6 may be implemented within the system memory controller of the processor semiconductor chip.

The following different kinds of software micro-services and/or other bodies of more granular code may make use of customized caching level treatment with, e.g., the below suggested customized caching configurations.
1. Software that provides information for immediate display to a user (e.g., a product catalog micro-service, an on-line order micro-service, etc.) may be configured at least with the lowest latency caches (e.g., L1, L2, L3, L4) if not all caching levels to ensure potential customers do not become annoyed with slower performance of, e.g., an on-line service.
2. Statistics collection software tends to be used as background processes that do not have any immediate need. As such, they tend to be indifferent to data access latency and can be "left out" of the lowest latency caching levels if not all caching levels (e.g., be configured without any or very little caching level support).
3. Machine learning software processes, or other processes that rely on sets of low latency of references may be configured to consume large amounts of L1, L2, L3 and L4 caching level support at least to ensure that the references are on-die or just-off die to ensure low latency for these references. Here, the system memory addresses of these references at a minimum may be programmed into each of the L1, L2, L3 and L4 references to ensure the references receive caching treatment at these levels.
5. Software processes that use tiled data structures (e.g., graphics processing software threads that break an image down into smaller, rectangular tiles of an image) where such tiles are called up once from memory/storage, operated upon by the software and then written back with little/no access thereafter, may be configured to have lowest latency caching levels (e.g., L1, L2, L3) but no lower level caching support (e.g., L4, MSC and edge cache). Here, e.g., after being operating on at the L1, L2 and L3 levels, each tile is not really utilized. As such, an eviction path from the L3 to the L4, MSC and/or edge cache levels would only consume these caching resources with little/no access activity being issued to them. The tiles can therefore be written directly back to mass storage or system memory without consuming/wasting any of the L4, MSC or edge cache resources.

Note that the exclusive caches can also be easily implemented with the above described architecture. Here, an exclusive cache is a cache that dedicated to a particular entity, such as a particular software application such that competing requests for a same cache item and/or cache slot are not possible. Here, traditional caches include coherency logic to deal with the former and snoop logic (e.g., that hashes a request address to identify its cache slot). Coherency logic and snoop logic are generally associated with the look-up logic 602 of Fig. 6. In various embodiments, the look-up logic 602 is designed with bypass paths to bypass either or both the coherency logic or snoop logic in the case where the local cache is to be implemented as an exclusive cache.

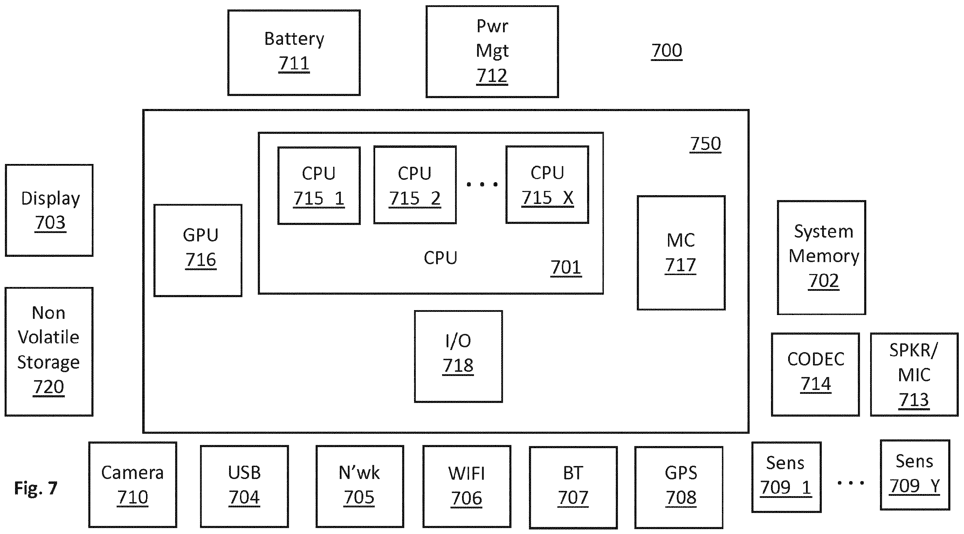

FIG. 7 provides an exemplary depiction of a computing system 700 (e.g., a smartphone, a tablet computer, a laptop computer, a desktop computer, a server computer, etc.). As observed in FIG. 7, the basic computing system 700 may include a central processing unit 701 (which may include, e.g., a plurality of general purpose processing cores 715_1 through 715_X) and a main memory controller 717 disposed on a multi-core processor or applications processor, system memory 702, a display 703 (e.g., touchscreen, flat-panel), a local wired point-to-point link (e.g., USB) interface 704, various network I/O functions 705 (such as an Ethernet interface and/or cellular modem subsystem), a wireless local area network (e.g., WiFi) interface 706, a wireless point-to-point link (e.g., Bluetooth) interface 707 and a Global Positioning System interface 708, various sensors 709_1 through 709_Y, one or more cameras 710, a battery 711, a power management control unit 712, a speaker and microphone 713 and an audio coder/decoder 714.

An applications processor or multi-core processor 750 may include one or more general purpose processing cores 715 within its CPU 701, one or more graphical processing units 716, a memory management function 717 (e.g., a memory controller) and an I/O control function 718. The general purpose processing cores 715 typically execute the operating system and application software of the computing system which may include micro-service software programs as described above. Even lower levels of software may be executed by the processing cores such as, e.g., a virtual machine monitor.

The graphics processing unit 716 typically executes graphics intensive functions to, e.g., generate graphics information that is presented on the display 703. The memory control function 717 (e.g., a system memory controller) interfaces with the system memory 702 to write/read data to/from system memory 702. The power management control unit 712 generally controls the power consumption of the system 700.

Each of the touchscreen display 703, the communication interfaces 704-707, the GPS interface 708, the sensors 709, the camera(s) 710, and the speaker/microphone codec 713, 714 all can be viewed as various forms of I/O (input and/or output) relative to the overall computing system including, where appropriate, an integrated peripheral device as well (e.g., the one or more cameras 710). Depending on implementation, various ones of these I/O components may be integrated on the applications processor/multi-core processor 750 or may be located off the die or outside the package of the applications processor/multi-core processor 750.

Different caching levels of the system (e.g., the L1, L2, L3 and L4 levels of a processor chip that contains the processing cores 715, the memory controller 717 and I/O controller 718 (also referred to as a peripheral controller) may have a gateway function for determining which requests are to receive local cache treatment and/or which lower cache level is the appropriate cache miss or eviction destination. The gateway function and associated look-up circuitry may be implemented with any of hardware logic circuitry, programmable logic circuitry (e.g., SRAM, DRAM, FPGA, PLD, PLA, etc.) and/or logic circuitry that is designed to execute some form of program code (e.g., an embedded processor, an embedded controller, etc.). The local cache resources that are associated with the gateway and look-up circuitry may be implemented with any information retention circuitry (e.g., DRAM circuitry, SRAM circuitry, non volatile memory circuitry, etc.).

Embodiments of the invention may include various processes as set forth above. The processes may be embodied in machine-executable instructions. The instructions can be used to cause a general-purpose or special-purpose processor to perform certain processes. Alternatively, these processes may be performed by specific/custom hardware components that contain hardwired logic circuitry or programmable logic circuitry (e.g., FPGA, PLD) for performing the processes, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, FLASH memory, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

In the foregoing specification, the invention has been described with reference to specific exemplary embodiments thereof. It will, however, be evident that various modifications and changes may be made thereto without departing from the scope of the invention as set forth in the appended claims. The specification and drawings are, accordingly, to be regarded in an illustrative rather than a restrictive sense.

## Claims

1. An apparatus, comprising;
a processor (107, 750) comprising one or more cache circuits, at least one of the cache circuits comprising local cache resources and gateway logic circuitry (301), the gateway logic circuitry to:
a) determine which requests received by the cache circuit are to be directed to the local cache resources, and
b) determine which lower level cache resource that any of the following are to be directed to: i) a request that suffers a cache miss in the local cache resources; ii) an item that has been evicted from the local cache resources;
**characterised in that** the gateway circuitry in each of said at least one of the cache circuits is, by a plurality of pathways (302, 303, 304, 305), directly connected to each lower level cache and to the system memory; and
**in that** each pathway corresponds to a configurable address range.

2. The apparatus of claim 1 wherein the local cache resources comprise at least one of a level one - L1 - cache, level two - L2 - cache and a level three - L3 - cache.

3. The apparatus of claim 1 wherein the local cache resources comprise an L4 cache.

4. The apparatus of claim 1 wherein the local cache resources comprise a memory side cache.

5. The apparatus of claim 4 wherein the memory side cache comprises more than one memory side cache level.

6. The apparatus of claim 4 wherein the memory side cache is implemented with a pluggable component.

7. The apparatus of claim 6 wherein the memory side cache comprises at least one of:
a dynamic random access memory - DRAM- dual in-line memory module -DIMM- ;
DRAM disposed on a DIMM that also has non volatile memory.

8. A computing system having the subject matter of any of claims 1 through 7.

## Patentansprüche

1. Vorrichtung, die Folgendes umfasst:
einen Prozessor (107, 750), der eine oder mehrere Cache-Schaltungen umfasst, wobei wenigstens eine der Cache-Schaltungen lokale Cache-Betriebsmittel und eine logische Gateway-Schaltungsanordnung (301) umfasst, wobei die logische Gateway-Schaltungsanordnung dazu dient,
a) zu bestimmen, welche durch die Cache-Schaltung empfangene Anforderungen zu den lokalen Cache-Betriebsmitteln zu leiten sind, und
b) zu bestimmen, zu welchem Cache-Betriebsmittel einer unteren Ebene irgendeines des Folgenden geleitet werden soll: i) eine Anforderung, die einen Cache-Fehltreffer in den lokalen Cache-Betriebsmitteln erfährt; ii) ein Element, das aus den lokalen Cache-Betriebsmitteln zwangsgeräumt worden ist;
**dadurch gekennzeichnet, dass** die Gateway-Schaltungsanordnung in jeder der wenigstens einen Cache-Schaltung durch mehrere Wege (302, 303, 304, 305) mit jedem Cache der unteren Ebene und mit dem Systemspeicher direkt verbunden ist; und
dass jeder Weg einem konfigurierbaren Adressenbereich entspricht.

2. Vorrichtung nach Anspruch 1, wobei die lokalen Cache-Betriebsmittel wenigstens einen eines Cache der Ebene eins - L1-Cache -, eines Cache der Ebene zwei - L2-Cache - und eines Cache der Ebene drei - L3-Cache - umfassen.

3. Vorrichtung nach Anspruch 1, wobei die lokalen Cache-Betriebsmittel einen L4-Cache umfassen.

4. Vorrichtung nach Anspruch 1, wobei die lokalen Cache-Betriebsmittel einen speicherseitigen Cache umfassen.

5. Vorrichtung nach Anspruch 4, wobei der speicherseitige Cache mehr als eine Ebene des speicherseitigen Cache umfasst.

6. Vorrichtung nach Anspruch 4, wobei der speicherseitige Cache mit einer steckbaren Komponente implementiert ist.

7. Vorrichtung nach Anspruch 6, wobei der speicherseitige Cache wenigstens eines des Folgenden umfasst:
ein "Dual-in-line"-Speichermodul, DIMM, eines dynamischen Schreib-Lese-Speichers, DRAM,
einen DRAM, der in einem DIMM angeordnet ist, das außerdem einen nichtflüchtigen Speicher aufweist.

8. Rechensystem, das den Gegenstand nach einem der Ansprüche 1 bis 7 aufweist.

## Revendications

1. Appareil comprenant :
un processeur (107, 750) comprenant un ou plusieurs circuits de cache, au moins un des circuits de cache comprenant des ressources de cache local et des circuits logiques de passerelle (301), les circuits logiques de passerelle servant à :
a) déterminer parmi des requêtes reçues par le circuit de cache celles qui doivent être dirigées vers les ressources de cache local, et
b) déterminer vers quelle ressource de cache de niveau inférieur l'une des ressources suivantes doit être dirigée : i) une requête qui pâtit d'un manque de cache dans les ressources de cache local ; ii) un élément qui a été expulsé des ressources de cache local ;
**caractérisé en ce que** les circuits de passerelle dans chacun dudit au moins un des circuits de cache est directement connecté, par une pluralité de chemins (302, 303, 304, 305), à chaque cache de niveau inférieur et à la mémoire système; et
**en ce que** chaque chemin correspond à une plage d'adresses configurable.

2. Appareil selon la revendication 1 dans lequel les ressources de cache local comprennent au moins un d'un cache de niveau un - L1 -, d'un cache de niveau deux - L2 - et d'un cache de niveau trois - L3 -.

3. Appareil selon la revendication 1 dans lequel les ressources de cache local comprennent un cache L4.

4. Appareil selon la revendication 1 dans lequel les ressources de cache local comprennent un cache côté mémoire.

5. Appareil selon la revendication 4 dans lequel le cache côté mémoire comprend plus d'un niveau de cache côté mémoire.

6. Appareil selon la revendication 4 dans lequel le cache côté mémoire est implémenté avec un composant enfichable.

7. Appareil selon la revendication 6 dans lequel le cache côté mémoire comprend au moins :
un module de mémoire à double rangée de connexions (DIMM) à mémoire vive dynamique (DRAM) ;
une DRAM disposée sur un DIMM doté également d'une mémoire non volatile.

8. Système informatique doté de l'objet selon l'une quelconque des revendications 1 à 7.
